# EUROPEAN PATENT APPLICATION

(11) **EP 4 358 210 A1**
(43) Date of publication of application: **24.04.2024**
(21) Application number: 23198904.7
(22) Date of filing: 21.09.2023
(51) Int. Cl.: H01M 10/04, H01M 10/647, H01M 50/209, H01M 50/233, H01M 10/613, H01M 50/264

(54) **BATTERY MODULE**

(30) Priority: 20.10.2022 JP 2022168087
(71) Applicant: Prime Planet Energy & Solutions, Inc., Chuo-ku Tokyo 103-0022 (JP)
(72) Inventor: ABE, Kosyo, Chuo-ku, Tokyo, 103-0022 (JP); TSUDA, Yoshihiro, Chuo-ku, Tokyo, 103-0022 (JP)
(74) Representative: Kuhnen & Wacker Patent- und Rechtsanwaltsbüro PartG mbB

(57) **Abstract**

A first imaginary arc (A1) is defined with a first imaginary point (C1) as a center, the first imaginary arc (A1) including three points that are a center (33a) and both ends (33b, 33c) of a third portion (33) in a second direction orthogonal to a first direction, the first imaginary point (C1) being located on a fourth portion (34) side with respect to a first imaginary straight line (L1) that connects the both ends (33b, 33c) of the third portion (33) in the first direction. A second imaginary arc (A2) is defined as a center, the second imaginary arc (A2) including three points that are a center (34a) and both ends (34b, 34c) of the fourth portion (34) in the second direction, the second imaginary point (C2) being located on the third portion (33) side with respect to a second imaginary straight line (L2) that connects the both ends (34b, 34c) of the fourth portion (34) in the first direction.

## Description

### CROSS REFERENCE TO RELATED APPLICATIONS

This nonprovisional application is based on Japanese Patent Application No. 2022-168087 filed on October 20, 2022 with the Japan Patent Office, the entire contents of which are hereby incorporated by reference.

### BACKGROUND OF THE INVENTION

### Field of the Invention

The present technology relates to a battery module.

### Description of the Background Art

WO 2016/002178 is a prior art document that discloses a configuration of a power supply device. The power supply device described in WO 2016/002178 includes: a battery stack including a plurality of battery cells; and a restraint member. The restraint member restrains the battery stack. A plurality of openings are formed in the restraint member for the purpose of weight reduction. Each of the plurality of openings has a triangular shape due to a plurality of reinforcing portions being provided between the plurality of openings.

WO 2021/024774 is a prior art document that discloses a configuration of a power supply device. The power supply device described in WO 2021/024774 includes: a battery stack formed by stacking a plurality of battery cells; and a binding bar. The binding bar fastens the battery stack. The binding bar is provided with an opening region to send a cooling gas to between the battery cells. The opening region has a quadrangular shape or a trapezoid shape.

### SUMMARY OF THE INVENTION

In each of the restraint members included in the power supply devices of WO 2016/002178 and WO 2021/024774, there is room for improvement in reducing a weight of the restraint member while securing strength of the restraint member.

The present technology has been made to solve the above-described problem and has an object to provide a battery module to reduce a weight of a restraint member while securing strength of the restraint member.

The present technology provides the following battery module.
[1] A battery module comprising:
   a plurality of battery cells arranged side by side in a first direction, each of the plurality of battery cells having a prismatic shape; and
   a restraint member that restrains the plurality of battery cells in the first direction, wherein
   the restraint member includes a main body portion extending in the first direction and provided with an opening,
   the opening has an edge,
   the edge has
      a first portion and a second portion each extending substantially straightly along the first direction,
      a third portion and a fourth portion arranged side by side in the first direction and facing each other, and
      a connection portion that connects each of the first portion and the second portion to each of the third portion and the fourth portion,
   a first imaginary arc is defined with a first imaginary point as a center, the first imaginary arc including three points that are a center and both ends of the third portion in a second direction orthogonal to the first direction, the first imaginary point being located on the fourth portion side with respect to a first imaginary straight line that connects the both ends of the third portion in the first direction, and
   a second imaginary arc is defined with a second imaginary point as a center, the second imaginary arc including three points that are a center and both ends of the fourth portion in the second direction, the second imaginary point being located on the third portion side with respect to a second imaginary straight line that connects the both ends of the fourth portion in the first direction.
[2] The battery module according to [1], wherein each of the first imaginary point and the second imaginary point is located outside the opening.
[3] The battery module according to [1] or [2], wherein the opening has a substantially barrel shape.
[4] The battery module according to any one of [1] to [3], wherein the restraint member includes a flange portion at each of both ends of the main body portion in the second direction, the flange portion protruding toward the plurality of battery cells side along a third direction orthogonal to the first direction and the second direction.
[5] The battery module according to any one of [1] to [4], wherein each of the third portion and the fourth portion is formed to have an arc shape.
[6] The battery module according to any one of [1] to [4], wherein each of the third portion and the fourth portion is formed to have a curved shape.
[7] The battery module according to any one of [1] to [6], wherein the connection portion has no angular portion.
[8] The battery module according to any one of [1] to [7], wherein a plurality of the openings are provided side by side in the first direction.
[9] The battery module according to any one of [1] to [8], wherein the opening is provided at a position corresponding to a position between the plurality of battery cells.
[10] The battery module according to any one of [1] to [9], further comprising a case that accommodates the plurality of battery cells, that supports the plurality of battery cells in at least the first direction, and that forms a unit including the plurality of battery cells.
[11] The battery module according to any one of [1] to [10], wherein a direction of rolling of a material in the restraint member is along the second direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery module according to one embodiment of the present technology.
Fig. 2 is a perspective view showing an internal configuration of the battery module according to the embodiment of the present technology.
Fig. 3 is a perspective view showing a configuration of a unit included in the battery module according to the embodiment of the present technology.
Fig. 4 is a perspective view showing a configuration of a battery cell included in the battery module according to the embodiment of the present technology.
Fig. 5 is a side view showing an arrangement of openings of a restraint member according to the embodiment of the present technology.
Fig. 6 is a schematic view showing a configuration of an edge of each opening in the restraint member according to the embodiment of the present technology.
Fig. 7 is a side view showing directions in which loads are applied to surroundings around the openings of the restraint member according to the embodiment of the present technology.
Fig. 8 is a schematic view showing an opening of a restraint member according to a first modification.
Fig. 9 is a schematic view showing an opening of a restraint member according to a second modification.
Fig. 10 is a schematic view showing an opening of a restraint member according to a third modification.
Fig. 11 is a schematic view showing an opening of a restraint member according to a fourth modification.
Fig. 12 is a schematic view showing an opening of a restraint member according to a fifth modification.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

Further, the "battery module" can be mounted on vehicles such as a hybrid electric vehicle (HEV), a plug-in hybrid electric vehicle (PHEV), and a battery electric vehicle (BEV). It should be noted that the use of the "battery module" is not limited to the use in a vehicle.

It should be noted that in each of the figures, an X direction serving as a third direction is defined as a direction in which a positive electrode terminal and a negative electrode terminal of a battery cell are arranged, a Y direction serving as a first direction is defined as a direction in which a plurality of battery cells are stacked, and a Z direction serving as a second direction is defined as a height direction of the battery module.

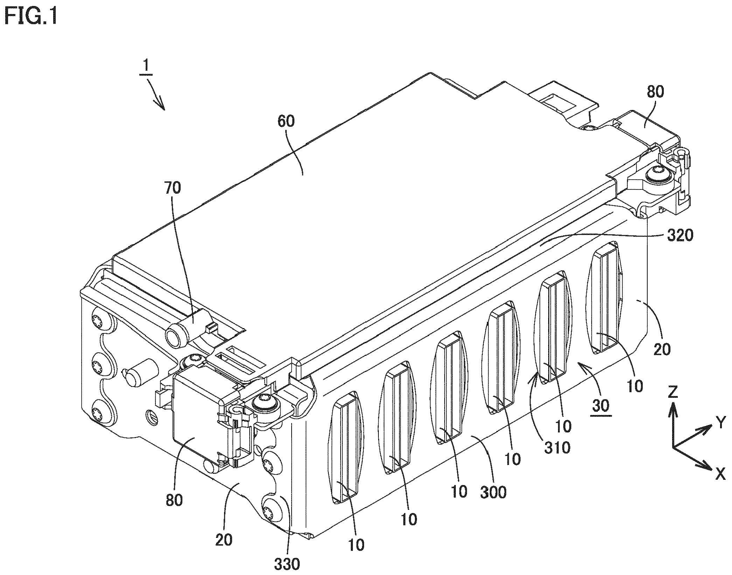

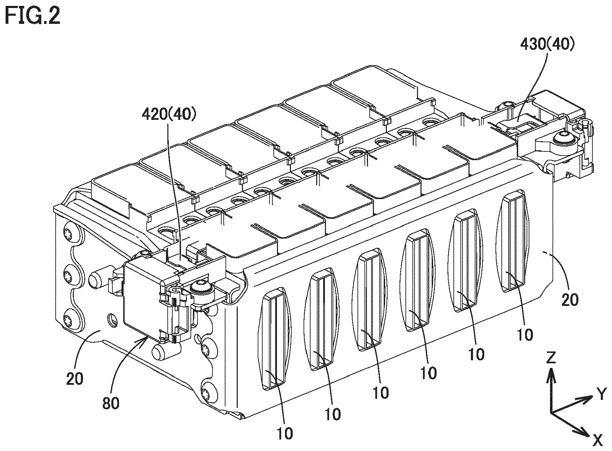

Fig. 1 is a perspective view showing a configuration of a battery module according to one embodiment of the present technology. Fig. 2 is a perspective view showing an internal configuration of the battery module according to the embodiment of the present technology.

First, an overall structure of battery module 1 will be described. As shown in Figs. 1 and 2, battery module 1 includes a plurality of units 10, end plates 20, restraint members 30, a bus bar 40, a cover member 60, a gas duct 70, and terminal members 80.

The plurality of units 10 are arranged side by side in the first direction (Y direction). Six units 10 are arranged side by side in the Y direction as the plurality of units 10 according to the present embodiment. It should be noted that the number of the plurality of units 10 is not particularly limited as long as two or more units 10 are included.

The plurality of units 10 are sandwiched between two end plates 20. The plurality of units 10 according to the present embodiment are pressed by end plates 20 and restrained between two end plates 20.

End plates 20 are provided at the both ends beside the plurality of units 10 in the Y direction. Each of end plates 20 is fixed to a base such as a pack case that accommodates battery module 1. End plate 20 is composed of, for example, aluminum or iron.

Restraint members 30 are provided on both sides beside the plurality of units 10 and end plates 20 in the X direction. When restraint members 30 are engaged with end plates 20 with compressive force in the Y direction being applied to the plurality of units 10 arranged side by side and to end plates 20 and then the compressive force is released, tensile force acts on restraint members 30 that connect two end plates 20. As a reaction thereto, restraint member 30 presses two end plates 20 in directions of bringing them closer to each other. As a result, restraint members 30 restrain the plurality of units 10 in the first direction (Y direction), each of the plurality of units 10 having a plurality of battery cells 100 described later.

Each of restraint members 30 includes a main body portion 300, first flange portions 320, and second flange portions 330. Restraint member 30 is composed of iron, for example.

Main body portion 300 is a member extending in the first direction (Y direction). Main body portion 300 is provided with a plurality of openings 310. The plurality of openings 310 are arranged side by side in the first direction (Y direction) and provided at intervals. Each of openings 310 is constituted of a through hole extending through main body portion 300 in the X direction.

First flange portions 320 protrude, along the third direction (X direction) orthogonal to the first direction (Y direction) and the second direction (Z direction), toward the plurality of battery cells 100 side at both ends of main body portion 300 in the second direction (Z direction). By providing first flange portions 320, rigidity of restraint member 30 formed to be relatively thin can be secured.

Second flange portions 330 are connected to both ends of main body portion 300 in the Y direction. Second flange portions 330 are fixed to end plates 20. Each of second flange portions 330 is fixed to end plate 20 by a known fixing method such as bolt fastening, for example. Thus, restraint members 30 connect two end plates 20 to each other.

As shown in Fig. 2, bus bar 40 is composed of an electric conductor. Bus bar 40 includes a first bus bar portion (not shown), a second bus bar portion 420, and a third bus bar portion 430.

The first bus bar portion (not shown) electrically connects a plurality of battery cells in unit 10 to each other. Second bus bar portion 420 electrically connects a battery cell disposed at one end in the Y direction to positive-side terminal member 80. Third bus bar portion 430 electrically connects a battery cell disposed at the other end in the Y direction to negative-side terminal member 80.

As shown in Fig. 1, cover member 60 protects electric connection of battery module 1. Cover member 60 is located above units 10 and covers an electric conductor such as bus bar 40. Gas duct 70 extends in the Y direction. Gas duct 70 is disposed between each of the plurality of units 10 and cover member 60 in the Z direction.

Terminal members 80 are arranged on both sides beside the plurality of units 10 arranged side by side in the Y direction. Each of terminal members 80 is provided at a position substantially overlapping with end plate 20 when viewed in the Z direction. Each of terminal members 80 connects battery module 1 to an external wiring such as a cable (not shown) disposed outside battery module 1.

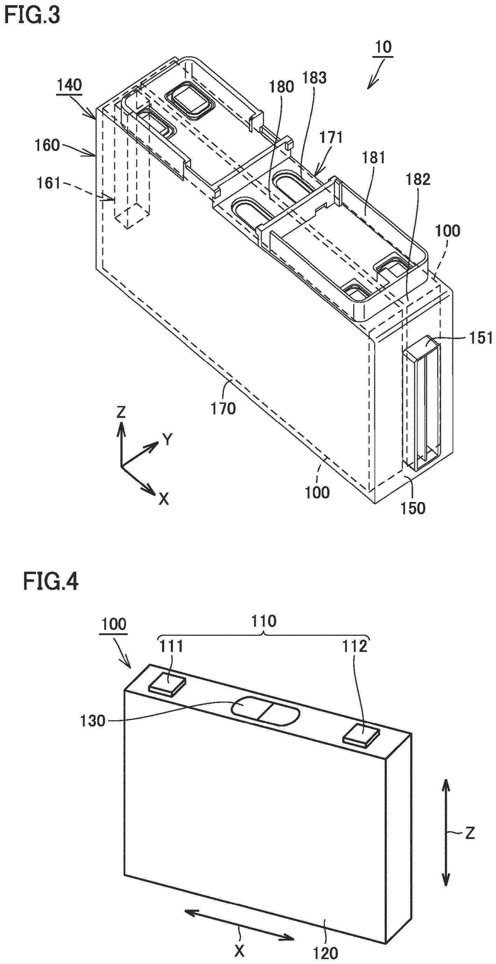

Next, a structure of each unit 10 will be described. Fig. 3 is a perspective view showing a configuration of a unit included in the battery module according to the embodiment of the present technology.

As shown in Fig. 3, each of the plurality of units 10 includes a plurality of battery cells 100 and a case 140.

Unit 10 includes two or more battery cells 100. Unit 10 according to one embodiment of the present technology includes two battery cells 100 as an even number of battery cells 100. It should be noted that the number of battery cells 100 included in each of the plurality of units 10 is not particularly limited as long as two or more battery cells 100 are included. Moreover, an odd number of battery cells 100 may be included in each of the plurality of units 10.

The plurality of battery cells 100 are arranged side by side in the first direction (Y direction). Two battery cells 100 are arranged side by side in the Y direction as the plurality of battery cells 100 according to the embodiment of the present technology. The arrangement direction of the plurality of units 10 is the same as the arrangement direction of the plurality of battery cells 100 in each of the plurality of units 10.

Case 140 has an external appearance with a rectangular parallelepiped shape. Case 140 accommodates the plurality of battery cells 100 and supports the plurality of battery cells 100 at least in the first direction (Y direction). Case 140 is composed of, for example, a resin such as polypropylene. As shown in Figs. 1 and 2, case 140 is compressed in the first direction (Y direction) by restraint members 30.

As shown in Fig. 3, case 140 has a front wall portion 150, a rear wall portion 160, a first side wall portion 170, a second side wall portion 171, and an upper surface portion 180.

Front wall portion 150 is a surface adjacent to one restraint member 30. Front wall portion 150 is provided with a first duct portion 151. First duct portion 151 protrudes from front wall portion 150 toward the one restraint member 30 side. First duct portion 151 is provided to extend through front wall portion 150 in the X direction.

Rear wall portion 160 is a surface facing front wall portion 150 with the plurality of battery cells 100 being interposed therebetween in the X direction. Rear wall portion 160 is provided with a second duct portion 161. Second duct portion 161 protrudes from rear wall portion 160 toward the other restraint member 30 side. Second duct portion 161 is provided to extend through rear wall portion 160 in the X direction. Second duct portion 161 communicates with first duct portion 151 through a cooling medium path 11 described later.

First side wall portion 170 and second side wall portion 171 are arranged side by side in the first direction (Y direction), and face each other.

Upper surface portion 180 includes a plurality of wall portions 181, engagement surfaces 182, and a plurality of hole portions 183. The plurality of wall portions 181 are provided to extend upward in the Z direction. The plurality of wall portions 181 define an installation location of bus bar 40. First flange portion 320 of restraint member 30 is engaged with each engagement surface 182. The plurality of hole portions 183 are formed such that electrode terminals 110 and a gas-discharge valve 130, which will be described later, are exposed from upper surface portion 180.

Fig. 4 is a perspective view showing a configuration of a battery cell included in the battery module according to the embodiment of the present technology.

As shown in Fig. 4, battery cell 100 is, for example, a lithium ion battery. Battery cell 100 has a prismatic shape. Battery cell 100 has an output density of, for example, about 8000 W/L or more. Battery cell 100 has a voltage of, for example, about 1.0 V or more.

Battery cell 100 according to the present embodiment has electrode terminals 110, a housing 120, and gas-discharge valve 130.

Electrode terminals 110 are formed on housing 120. Electrode terminals 110 have a positive electrode terminal 111 and a negative electrode terminal 112 as two electrode terminals 110 arranged side by side along the third direction (X direction).

Positive electrode terminal 111 and negative electrode terminal 112 are provided to be separated from each other in third direction (X direction). Positive electrode terminal 111 and negative electrode terminal 112 are provided on both sides beside gas duct 70 in the third direction (X direction). Positive electrode terminal 111 and negative electrode terminal 112 are joined to bus bar 40 by laser welding or the like.

Housing 120 has a rectangular parallelepiped shape, and forms the external appearance of battery cell 100. An electrode assembly (not shown) and an electrolyte solution (not shown) are accommodated in housing 120.

Gas-discharge valve 130 is provided in the upper surface portion of housing 120. When internal pressure of housing 120 becomes more than or equal to a predetermined value due to gas generated inside housing 120, gas-discharge valve 130 discharges the gas to the outside of housing 120. The gas from gas-discharge valve 130 flows through gas duct 70 and is discharged to the outside of battery module 1.

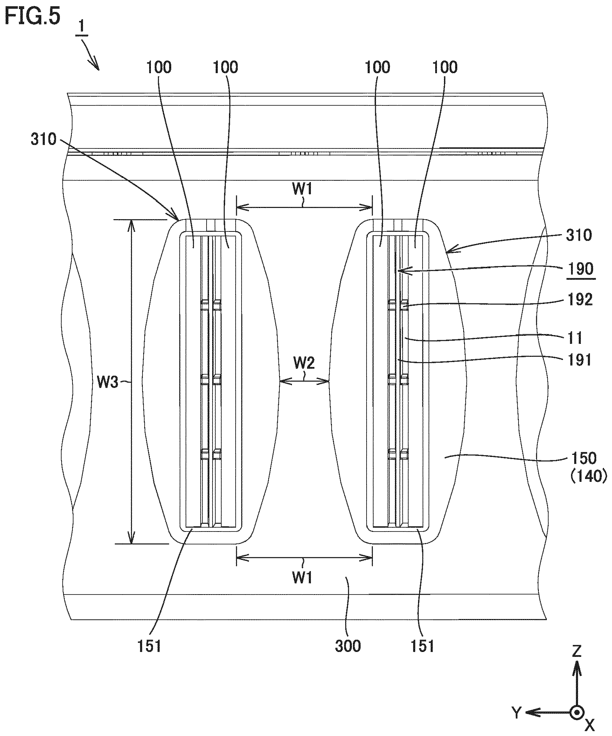

Fig. 5 is a side view showing the arrangement of the openings of the restraint member according to the embodiment of the present technology. It should be noted that the openings shown in Fig. 5 among the plurality of openings 310 represent openings 310 located in the vicinity of the center in the first direction (Y direction). Each of two openings 310 located at the both ends in the first direction (Y direction) among the plurality of openings 310 has a straight shape at a portion of a third portion 33 or fourth portion 34 of an edge 311 described later.

As shown in Fig. 5, partition wall members 190 are formed inside case 140. Each of partition wall members 190 has an insulating property. Partition wall member 190 is provided between the plurality of battery cells 100 in the Y direction.

Partition wall member 190 includes a plate-shaped portion 191 and a plurality of protrusions 192. Plate-shaped portion 191 extends in the Z direction between the plurality of battery cells 100.

The plurality of protrusions 192 protrude from plate-shaped portion 191 toward two battery cells 100, between which the plurality of protrusions 192 are sandwiched, of the plurality of battery cells 100. The plurality of protrusions 192 are in abutment with two battery cells 100.

Cooling medium path 11 along the third direction (X direction) is formed between the plurality of protrusions 192. A cooling medium flowing through cooling medium path 11 is, for example, air.

Cooling medium path 11 communicates with first duct portion 151 and second duct portion 161 in the X direction. The cooling medium flows to cooling medium path 11 through first duct portion 151 or second duct portion 161, thereby cooling battery cells 100.

Each of openings 310 is provided at a position corresponding to a position between the plurality of battery cells 100. Opening 310 in the present embodiment is provided such that cooling medium path 11 between the plurality of battery cells 100 is located inside opening 310 when viewed in the X direction.

Opening 310 has a substantially barrel shape when viewed in the third direction (X direction). The configuration of the shape of opening 310 will be described later.

A width W1 in the first direction (Y direction) between adjacent openings 310 at each of the both ends of openings 310 in the second direction (Z direction) is, for example, 22 mm. A width W2 in the first direction (Y direction) between adjacent openings 310 at the center of each of openings 310 in the second direction (Z direction) is narrower than width W1 and is, for example, 8 mm. A width W3 of each opening 310 in the second direction (Z direction) is, for example, 52.8 mm.

A ratio (W1/W2) of width W2 in the first direction (Y direction) between adjacent openings 310 at the center of each of openings 310 in the second direction (Z direction) to width W1 in the first direction (Y direction) between adjacent openings 310 at each of the both ends of openings 310 in the second direction (Z direction) is, for example, 2.8. It should be noted that this ratio (W1/W2) may be any value as long as it is more than 1, and may be 2.8 or more.

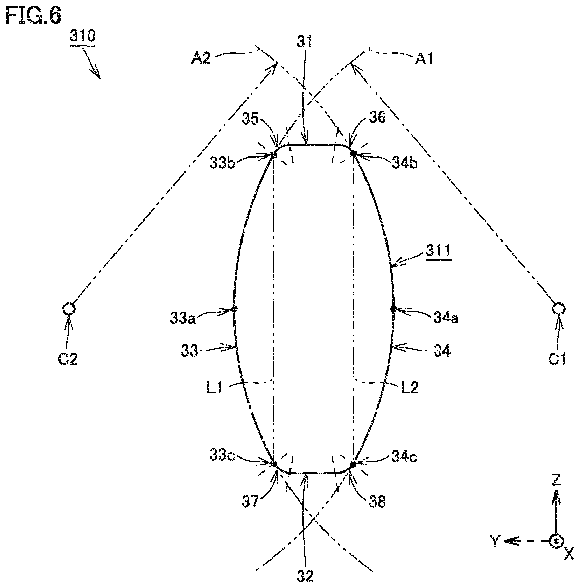

Fig. 6 is a schematic view showing a configuration of the edge of the opening in the restraint member according to the embodiment of the present technology. In Fig. 6, line segments constituting the edge of opening 310 are shown to be segmented by dotted lines.

As shown in Fig. 6, opening 310 has edge 311. Edge 311 has a first portion 31, a second portion 32, a third portion 33, a fourth portion 34, and connection portions.

Each of first portion 31 and second portion 32 extends substantially straightly along the first direction (Y direction). Third portion 33 and fourth portion 34 are arranged side by side in the first direction (Y direction) and face each other. It should be noted that each of first portion 31 and second portion 32 may have a straight shape, or may be a curved line having a smaller curvature than that of each of third portion 33 and fourth portion 34.

The connection portions connect each of first portion 31 and second portion 32 to each of third portion 33 and fourth portion 34. The connection portions according to the present embodiment have a first connection portion 35, a second connection portion 36, a third connection portion 37, and a fourth connection portion 38. Each of first to fourth connection portions 35 to 38 is constituted of a curved line.

First connection portion 35 connects first portion 31 to third portion 33. Second connection portion 36 connects first portion 31 to fourth portion 34. Third connection portion 37 connects second portion 32 to third portion 33. Fourth connection portion 38 connects second portion 32 to fourth portion 34. It should be noted that each of the connection portions is constituted of a curved line, but is not limited to this configuration, and may be constituted of a straight line or a point.

The substantially barrel shape of opening 310 is formed by defining first to fourth portions 31 to 34 and first to fourth connection portions 35 to 38 as follows. Specifically, the substantially barrel shape of opening 310 is defined using a first imaginary arc A1, a first imaginary straight line L1, a first imaginary point C1, a second imaginary arc A2, a second imaginary straight line L2, and a second imaginary point C2.

First imaginary arc A1 is an arc including three points that are center 33a and both ends 33b, 33c of third portion 33 in the second direction (Z direction) orthogonal to the first direction (Y direction). First imaginary straight line L1 is a straight line that connect both ends 33b, 33c of third portion 33. First imaginary point C1 is the center of first imaginary arc A1.

First imaginary arc A1 is defined with first imaginary point C1 as a center, first imaginary point C1 being located on the fourth portion 34 side with respect to first imaginary straight line L1 in the first direction (Y direction). Thus, third portion 33 forms a portion of the barrel shape in which center 33a bulges with respect to both ends 33b, 33c in a direction away from fourth portion 34 in the first direction (Y direction).

Second imaginary arc A2 is an arc including three points that are center 34a and both ends 34b, 34c of fourth portion 34 in the second direction (Z direction). Second imaginary straight line L2 is a straight line that connects both ends 34b, 34c of fourth portion 34. Second imaginary point C2 is the center of second imaginary arc A2.

Second imaginary arc A2 is defined with second imaginary point C2 as a center, second imaginary point C2 being located on the third portion 33 side with respect to second imaginary straight line L2 in the first direction (Y direction). Thus, fourth portion 34 forms a portion of the barrel shape in which center 34a bulges with respect to both ends 34b, 34c in a direction away from third portion 33 in the first direction (Y direction).

Each of first imaginary point C1 and second imaginary point C2 is located outside opening 310. Thus, each of center 33a of third portion 33 and center 34a of fourth portion 34 both constituting the portions of the substantially barrel shape is not widened too much in the first direction (Y direction), with the result that opening 310 is facilitated to have an optimal shape by which the weight of restraint member 30 can be reduced while securing the strength of restraint member 30.

Each of third portion 33 and fourth portion 34 is formed to have an arc shape. Thus, stress can be suppressed from being concentrated on each of third portion 33 and fourth portion 34. Further, the design and manufacturing of opening 310 can be simplified as compared with a case where the curvature of each of third portion 33 and fourth portion 34 is continuously changed.

Each of the connection portions has no angular portion. In the present embodiment, each of first to fourth connection portions 35 to 38 has no angular portion. Thus, stress can be suppressed from being concentrated on each of first to fourth connection portions 35 to 38, thereby improving the strength of restraint member 30.

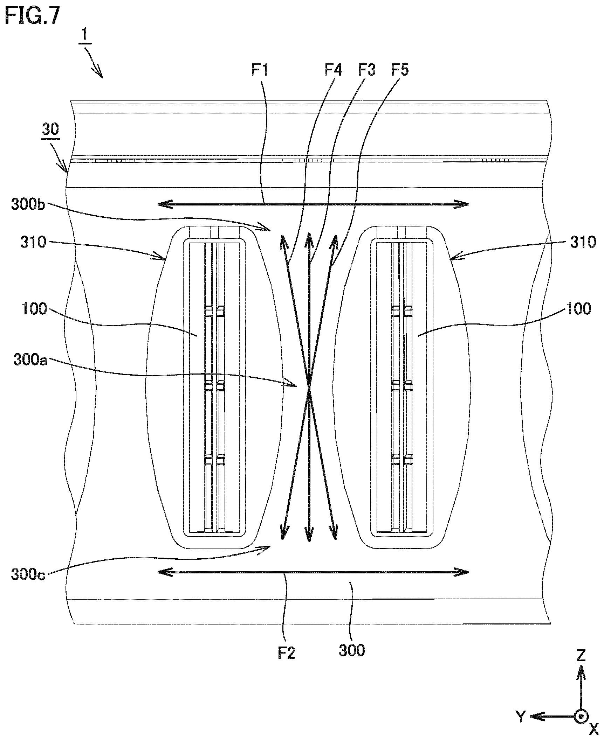

Fig. 7 is a side view showing directions in which loads are applied to surroundings around the openings of the restraint member according to the embodiment of the present technology.

As shown in Fig. 7, loads are applied to restraint member 30 in various directions due to expansion of battery cells 100 or external loads. Specifically, loads F1, F2 along the first direction (Y direction) or loads F3, F4, F5 along the second direction (Z direction) may be applied to restraint member 30, for example.

When a load is applied in the first direction (Y direction), load F1, F2 can be received above or below openings 310 in main body portion 300. Therefore, even though a central portion 300a of main body portion 300 in the second direction (Z direction) between openings 310 has a width narrower than that of each of both end portions 300b, 300c of main body portion 300 in the second direction (Z direction) between openings 310, the strength required for restraint member 30 is satisfied.

When a load is applied along the second direction (Z direction), load F3 parallel to the second direction (Z direction) or load F4, F5 inclined with respect to the second direction (Z direction) may be applied between openings 310. In this case, even though central portion 300a of main body portion 300 has the narrow width in the first direction (Y direction), each of loads F3, F4, F5 is applied to central portion 300a.

On the other hand, when each of both end portions 300b, 300c of main body portion 300 has a width in the first direction (Y direction) as narrow as that of central portion 300a of main body portion 300, loads F4, F5 are less likely to be received at both end portions 300b, 300c. Therefore, when each of both end portions 300b, 300c has a narrow width in the first direction (Y direction), resistance of restraint member 30 against each of loads F4, F5 is low. Therefore, the width, in the first direction (Y direction), of each of both end portions 300b, 300c in the second direction (Z direction) needs to be larger than the width, in the first direction (Y direction), of central portion 300a in the second direction (Z direction). By defining these widths between openings 310, the shape of each opening 310 is defined to have the substantially barrel shape.

A direction of rolling of a material in restraint member 30 is along the second direction (Z direction). In general, when a metal material having a plurality of grains is rolled, the metal material has higher toughness in the direction of rolling than in a direction orthogonal to the direction of rolling. Restraint member 30 in the present embodiment has higher toughness in the second direction (Z direction) than in the first direction (Y direction). Therefore, even though central portion 300a in the second direction (Z direction) between openings 310 has the narrow width in the first direction (Y direction), restraint member 30 satisfies a required load bearing property in central portion 300a.

In battery module 1 according to the embodiment of the present technology, first to fourth portions 31 to 34 in edge 311 of opening 310 provided in restraint member 30 are defined using first imaginary arc A1, first imaginary straight line L1, first imaginary point C1, second imaginary arc A2, second imaginary straight line L2, and second imaginary point C2. Thus, the center of opening 310 in the second direction (Z direction) can be wider in the first direction (Y direction) than each of the both ends thereof in the second direction (Z direction), thereby reducing the weight of restraint member 30 while securing the strength of restraint member 30.

In battery module 1 according to the embodiment of the present technology, each of first imaginary point C1 and second imaginary point C2 respectively defining third portion 33 and fourth portion 34 of edge 311 of opening 310 is located outside opening 310. Thus, each of center 33a of third portion 33 and center 34a of fourth portion 34 in the second direction (Z direction) is not widened too much in the first direction (Y direction) with respect to the both ends of opening 310 in the second direction (Z direction), with the result that opening 310 is facilitated to have an optimal shape by which the weight of restraint member 30 can be reduced while securing the strength of restraint member 30.

In battery module 1 according to the embodiment of the present technology, since opening 310 provided in restraint member 30 has the substantially barrel shape, the portions that each require the load bearing property are only constituted of restraint member 30, thereby reducing the weight of restraint member 30 while securing the strength of restraint member 30.

In battery module 1 according to the embodiment of the present technology, since first flange portion 320 is provided at main body portion 300 of restraint member 30 in the third direction (X direction), main body portion 300 can be suppressed from being deformed, with the result that the strength of restraint member 30 can be facilitated to be secured.

In battery module 1 according to the embodiment of the present technology, since each of third portion 33 and fourth portion 34 of edge 311 of opening 310 is formed to have the arc shape, stress can be suppressed from being concentrated on each of third portion 33 and fourth portion 34. Further, the design and manufacturing of opening 310 can be simplified as compared with the case where the curvature of each of third portion 33 and fourth portion 34 is continuously changed.

In battery module 1 according to the embodiment of the present technology, each of first to fourth connection portions 35 to 38 of edge 311 of opening 310 has no angular portion. Thus, stress can be suppressed from being concentrated on each connection portion of edge 311, thereby improving the strength of restraint member 30.

In battery module 1 according to the embodiment of the present technology, since the plurality of openings 310 each having the substantially barrel shape are arranged side by side in the first direction (Y direction), the weight of restraint member 30 can be reduced.

In battery module 1 according to the embodiment of the present technology, since each opening 310 is provided at a position corresponding to a position between the plurality of battery cells 100, cooling medium path 11 and opening 310 can communicate with each other to allow the cooling medium to flow between battery cells 100, thereby cooling battery cells 100.

In battery module 1 according to the embodiment of the present technology, even when unit 10 is formed using case 140 that accommodates the plurality of battery cells 100, the configuration of opening 310 having the substantially barrel shape can be applied to restraint member 30.

In battery module 1 according to the embodiment of the present technology, since the direction of rolling of restraint member 30 is in the second direction (Z direction), the toughness of restraint member 30 in the second direction (Z direction) is increased, with the result that the width in the first direction (Y direction) in central portion 300a between the plurality of openings 310 can be narrow to attain a reduced weight of restraint member 30.

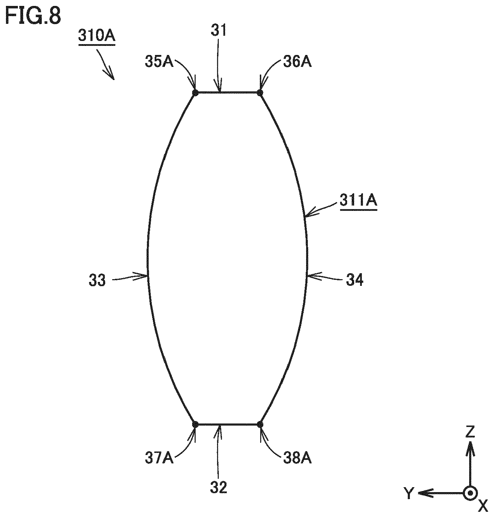

Hereinafter, battery modules according to modifications of the embodiment of the present technology will be described. Since the battery module according to each of the modifications is different from battery module 1 according to the embodiment of the present technology in terms of the configuration of the opening of the restraint member, the same configurations as those in battery module 1 according to the embodiment of the present technology will not be described repeatedly. It should be noted that in Figs. 8 to 12 showing the modifications, there are portions in which line segments constituting the edge of the opening are shown to be segmented by dotted lines.

Fig. 8 is a schematic view showing an opening of a restraint member according to a first modification. As shown in Fig. 8, in an edge 311A of an opening 310A of the restraint member according to the first modification, each of a first connection portion 35A, a second connection portion 36A, a third connection portion 37A, and a fourth connection portion 38A is formed to have a point shape. Thus, edge 311A has an angular portion.

In the battery module according to the first modification, even though edge 311A of opening 310A has the angular portion, the center of opening 310A in the second direction (Z direction) can be wider in the first direction (Y direction) than each of the both ends of opening 310A in the second direction (Z direction), thereby reducing the weight of the restraint member while securing the strength of the restraint member.

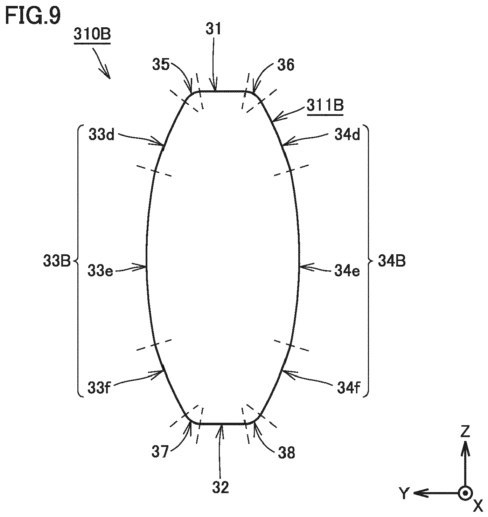

Fig. 9 is a schematic view showing an opening of a restraint member according to a second modification. As shown in Fig. 9, in an edge 311B of an opening 310B of the restraint member according to the second modification, each of a third portion 33B and a fourth portion 34B is formed to have a curved shape. Specifically, third portion 33B is constituted of a first curved line 33d, a second curved line 33e, and a third curved line 33f, which have different curvatures. Also, fourth portion 34B is constituted of a fourth curved line 34d, a fifth curved line 34e, and a sixth curved line 34f, which have different curvatures.

In the battery module according to the second modification, each of third portion 33B and fourth portion 34B can be formed by combining the curved lines having the different curvatures, thereby facilitating to obtain the substantially barrel shape of opening 310B having the required strength.

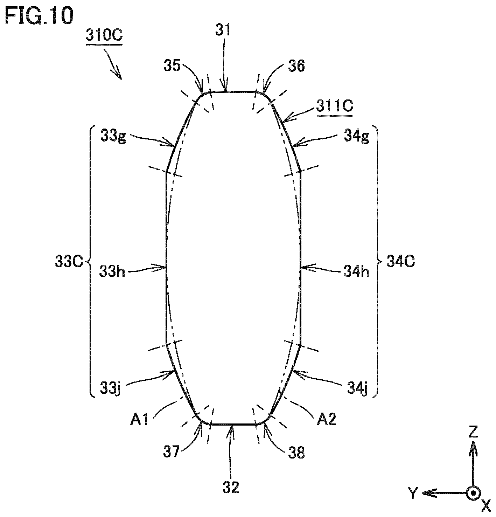

Fig. 10 is a schematic view showing an opening of a restraint member according to a third modification. As shown in Fig. 10, in an edge 311C of an opening 310C in the restraint member according to the third modification, each of a third portion 33C and a fourth portion 34C has a portion having a straight shape. Specifically, third portion 33C is constituted of a first curved line 33g, a first straight line 33h, and a second curved line 33j. Also, fourth portion 34C is constituted of a third curved line 34g, a second straight line 34h, and a fourth curved line 34j.

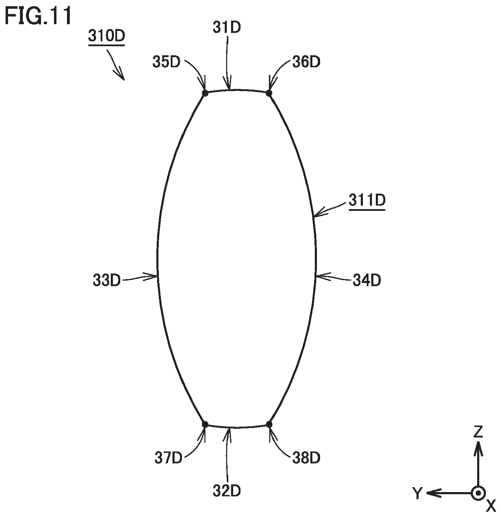

Fig. 11 is a schematic view showing an opening of a restraint member according to a fourth modification. As shown in Fig. 11, in an edge 311D of an opening 310D in the restraint member according to the fourth modification, each of a first portion 31D, a second portion 32D, a third portion 33D, and a fourth portion 34D is constituted of a curved line. First to fourth portions 31D to 34D are connected together by first to fourth connection portions 35D to 38D, each of which is constituted of a point.

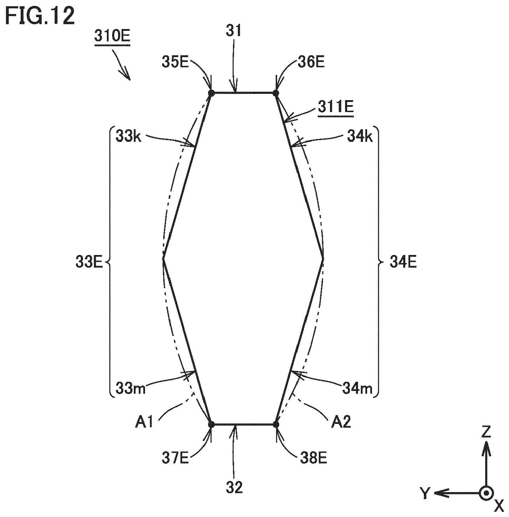

Fig. 12 is a schematic view showing an opening of a restraint member according to a fifth modification. As shown in Fig. 12, in an edge 311E of an opening 310E of the restraint member according to the fifth modification, each of a third portion 33E and a fourth portion 34E is constituted of a straight line. Specifically, third portion 33E is constituted of a first straight line 33k and a second straight line 33m. Fourth portion 34C is constituted of a third straight line 34k and a fourth straight line 34m. First to fourth portions 31 to 34E are connected together by first to fourth connection portions 35E to 38E, each of which is constituted of a point.

Also in each of the battery modules according to the third to fifth modifications, since the center of a corresponding one of openings 310C to 310E in the second direction (Z direction) can be wider in the first direction (Y direction) than each of both ends thereof in the second direction (Z direction), the weight of the restraint member can be reduced while securing the strength of the restraint member.

It should be noted that each of the above-described openings has such a configuration that the third portion and the fourth portion are bilaterally symmetrical to each other when viewed in the third direction (X direction); however, it is not limited to this configuration. In the opening, the third portion and the fourth portion may have shapes different from each other.

Although the embodiments of the present invention have been described and illustrated in detail, it is clearly understood that the same is by way of illustration and example only and is not to be taken by way of limitation, the scope of the present invention being interpreted by the terms of the appended claims. The scope of the present invention is defined by the terms of the claims, and is intended to include any modifications within the scope and meaning equivalent to the terms of the claims.

## Claims

1. A battery module comprising:
a plurality of battery cells (100) arranged side by side in a first direction, each of the plurality of battery cells (100) having a prismatic shape; and
a restraint member (30) that restrains the plurality of battery cells (100) in the first direction, wherein
the restraint member (30) includes a main body portion (300) extending in the first direction and provided with an opening (310),
the opening (310) has an edge (311),
the edge (311) has
a first portion (31) and a second portion (32) each extending substantially straightly along the first direction,
a third portion (33) and a fourth portion (34) arranged side by side in the first direction and facing each other, and
a connection portion (35, 36, 37, 38) that connects each of the first portion (31) and the second portion (32) to each of the third portion (33) and the fourth portion (34),
a first imaginary arc (A1) is defined with a first imaginary point (C1) as a center, the first imaginary arc (A1) including three points that are a center (33a) and both ends (33b, 33c) of the third portion (33) in a second direction orthogonal to the first direction, the first imaginary point (C1) being located on the fourth portion (34) side with respect to a first imaginary straight line (L1) that connects the both ends (33b, 33c) of the third portion (33) in the first direction, and
a second imaginary arc (A2) is defined with a second imaginary point (C2) as a center, the second imaginary arc (A2) including three points that are a center (34a) and both ends (34b, 34c) of the fourth portion (34) in the second direction, the second imaginary point (C2) being located on the third portion (33) side with respect to a second imaginary straight line (L2) that connects the both ends (34b, 34c) of the fourth portion (34) in the first direction.

2. The battery module according to claim 1, wherein each of the first imaginary point (C1) and the second imaginary point (C2) is located outside the opening (310).

3. The battery module according to claim 1 or 2, wherein the opening (310) has a substantially barrel shape.

4. The battery module according to claim 1 or 2, wherein the restraint member (30) includes a flange portion (320) at each of both ends of the main body portion (300) in the second direction, the flange portion (320) protruding toward the plurality of battery cells (100) side along a third direction orthogonal to the first direction and the second direction.

5. The battery module according to claim 1 or 2, wherein each of the third portion (33) and the fourth portion (34) is formed to have an arc shape.

6. The battery module according to claim 1 or 2, wherein each of the third portion (33) and the fourth portion (34) is formed to have a curved shape.

7. The battery module according to claim 1 or 2, wherein the connection portion (35, 36, 37, 38) has no angular portion.

8. The battery module according to claim 1 or 2, wherein a plurality of the openings (310) are provided side by side in the first direction.

9. The battery module according to claim 1 or 2, wherein the opening (310) is provided at a position corresponding to a position between the plurality of battery cells (100).

10. The battery module according to claim 1 or 2, further comprising a case (140) that accommodates the plurality of battery cells (100), that supports the plurality of battery cells (100) in at least the first direction, and that forms a unit (10) including the plurality of battery cells (100).

11. The battery module according to claim 1 or 2, wherein a direction of rolling of a material in the restraint member (30) is along the second direction.
